(19) Europäisches Patentamt / European Patent Office / Office européen des brevets

(11) **EP 2 966 400 B1**

(12) **EUROPEAN PATENT SPECIFICATION**

(45) Date of publication and mention
of the grant of the patent:
**28.03.2018 Bulletin 2018/13**

(21) Application number: **14760829.3**

(22) Date of filing: **03.03.2014**

(51) Int Cl.:
***B60M 1/28*** *(2006.01)*     ***G01B 11/00*** *(2006.01)*

(86) International application number:
**PCT/JP2014/056084**

(87) International publication number:
**WO 2014/136976 (12.09.2014 Gazette 2014/37)**

(54) **OVERHEAD LINE POSITION MEASURING DEVICE AND METHOD**

POSITIONSMESSVORRICHTUNG UND -VERFAHREN FÜR OBERLEITUNGEN

DISPOSITIF DE MESURE DE POSITION DE LIGNE AÉRIENNE ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2013 JP 2013042220**

(43) Date of publication of application:
**13.01.2016 Bulletin 2016/02**

(73) Proprietors:
• **Railway Technical Research Institute
Kokubunji-shi, Tokyo 185-8540 (JP)**
• **Meidensha Corporation
Tokyo 141-6029 (JP)**

(72) Inventors:
• **MATSUMURA, Itaru
Kokubunji-shi, Tokyo 185-8540 (JP)**
• **NEZU, Kazuyoshi
Kokubunji-shi, Tokyo 185-8540 (JP)**

• **ABOSHI, Mitsuo
Kokubunji-shi, Tokyo 185-8540 (JP)**
• **KAWABATA, Takuro
Tokyo 141-6029 (JP)**
• **NIWAKAWA, Makoto
Tokyo 141-6029 (JP)**
• **TABAYASHI, Seiji
Tokyo 141-6029 (JP)**

(74) Representative: **Cabinet Plasseraud
66, rue de la Chaussée d'Antin
75440 Paris Cedex 09 (FR)**

(56) References cited:
WO-A1-02/21076     WO-A1-2011/088509
WO-A2-02/21445     JP-A- 2003 030 776
JP-A- 2006 250 775     JP-A- 2009 236 574
JP-A- 2010 510 559     JP-A- 2012 008 026
JP-A- 2012 008 026

**Description**

TECHNICAL FIELD

The present invention relates to an overhead line position measuring apparatus and an overhead line position measuring method for measuring a three-dimensional position of an electric traction overhead line (hereinafter, also called "overhead line").

BACKGROUND ART

Generally, as a current collection system of electric railways, an overhead electric traction system is widely used in which an overhead line is situated over the railway track on which a railway vehicle passes, and electric power is collected from the overhead line by means of a current collector such as a pantograph mounted on a roof of the railway vehicle. The overhead line which contacts the pantograph to supply electric power to the railway vehicle is called a contact wire.

As a system for situating the contact wire, there are some systems such as a direct suspension system in which the contact wire is directly suspended at supporting points or the like, a catenary suspension system in which the contact wire is suspended at a constant height by using a catenary (messenger wire), and an overhead rigid conductor system in which the contact wire is suspended at a constant height by using structural angles. Further, as the catenary suspension system, there are a simple catenary system, a twin simple catenary system, a compound catenary system, and so on.

The simple catenary system is configured such that the contact wire is suspended from the messenger wire via metal rods called droppers. The twin simple catenary system is configured such that two pairs of overhead lines of the simple catenary systems are arranged side by side.

The compound catenary system is configured such that an auxiliary messenger wire is added between the messenger wire and the contact wire, the auxiliary messenger wire is suspended from the messenger wire via droppers, and the contact wire is suspended from the auxiliary messenger wire via the droppers. Thereby, uplift of the contact wire pushed up by the pantograph is made uniform.

The overhead rigid conductor system is configured such that the contact wire is suspended from the structural angles made of aluminum or copper via metal fittings called ears.

By the way, if the overhead line such as the contact wire gets out of a predetermined position, not only the pantograph cannot normally contact the contact wire, but also an accident or train trouble may be caused. Accordingly, it is necessary to measure the position of the overhead line and inspect whether the overhead line is in the predetermined position or not. On that account, a contact wire position measuring apparatus employing stereo line sensors and so on has been developed.

For example, Japanese patent application publication JP-P2012-8026A discloses an overhead line position measuring apparatus. The apparatus includes : a first line sensor camera and a second line sensor camera respectively arranged on a roof of a vehicle and in a direction of railway sleepers, and for imaging an overhead line; a laser distance meter arranged near the first and second line sensor cameras and directed vertically upward, and for measuring a distance to the overhead line; a first image processing part for calculating position information of the overhead line in a line sensor image based on image data outputted from the first line sensor camera; a second image processing part for calculating position information of the overhead line in a line sensor image based on image data outputted from the second line sensor camera; a processing memory for storing the position information of the overhead line in the line sensor image outputted from the first and second image processing parts and distance information outputted from the laser distance meter; a stereo corresponding point searching part for searching for stereo corresponding points based on the position information of the overhead line in the line sensor image and the distance information; and a height and displacement calculating part for calculating a height and a displacement of the overhead line based on the stereo corresponding points.

WO2011/088509A1 already discloses a system for optically measuring a three-dimensional location of overhead electric power lines or wire for an electric system. WO2011/088509A1 utilises four cameras C1, C2, C3, and C4 arranged in a common plane P1 to form camera pairs 10a and 10b. The cameras C1-C4 are arranged to have their respective fields of view V1-V4 overlap to view a common region of interest. According to WO2011/088509A1, image data from the camera pairs 10a and 10b results in smaller region of uncertainty, as stereoscopic image data from the camera pairs are combined.

## SUMMARY OF INVENTION

### Technical Problem

However, the overhead line position measuring apparatus disclosed in JP-P2012-8026A is aimed to measure a position **of the contact wire, and no apparatus or method effective for contactlessly measuring a position of an overhead line other than the contact wire is yet developed. Based on only** images obtained by two line sensors , it is difficult to separate the imaged overhead line from a background or specify a kind of the overhead line. Therefore, as to the overhead line such as the messenger wire or the auxiliary messenger wire other than the contact wire, there has been a problem that the position measurement using an inspection car cannot be conducted and it is necessary to manually measure the position thereof from the railway track by using a rod made of FRP (fiber reinforced plastics) or the like.

Accordingly, an object of the present invention is to enable contactless three-dimensional position measurement using an inspection car or the like as to overhead lines including not only the contact wire but also sectioning devices or supporting structures for advanced maintenance of the overhead lines. Further, another object of the present invention is to suitably separate an overhead line as an object to be measured from other overhead lines or a background to reduce an amount of the calculation or improve the calculation accuracy when calculating a position of the overhead line.

### Solution to Problem

In order to solve the above-mentioned problem, an overhead line position measuring apparatus according to claim 1 is provided. Further, an overhead line position measuring method according to claim 8 is provided.

### Advantageous Effects of Invention

According to one aspect of the present invention, even in the case where plural overhead lines are situated to overlap with each other when captured from one three-dimensional measuring device, it is possible to separately measure those overhead lines by using plural three-dimensional measuring devices. As a result, it becomes also possible to conduct contactless three-dimensional position measurement with high accuracy by using an inspection car or the like as to an overhead line other than the contact wire, and therefore, advanced maintenance of the overhead lines is achieved. Further, by combining setting of a region of interest based on overhead line position measurement using plural three-dimensional measuring devices with stereo measurement using plural cameras, it is possible to reduce an amount of the calculation or improve the calculation accuracy when calculating a position of the overhead line.

## BRIEF DESCRIPTION OF DRAWINGS

Fig. 1 shows a railway vehicle provided with an overhead line position measuring apparatus according to an embodiment of the present invention;
Fig. 2 is a schematic diagram comparatively showing images before and after image processing by an image processing part;
Fig. 3 shows examples of a coefficient matrix of a Sobel filter;
Fig. 4 is a diagram for explanation of a principle for calculating a position of an overhead line; and
Fig. 5 is a flow chart showing an overhead line position measuring method according to an embodiment of the present invention.

## DESCRIPTION OF EMBODIMENTS

Hereinafter, an embodiment of the present invention will be explained in detail by referring to the drawings.

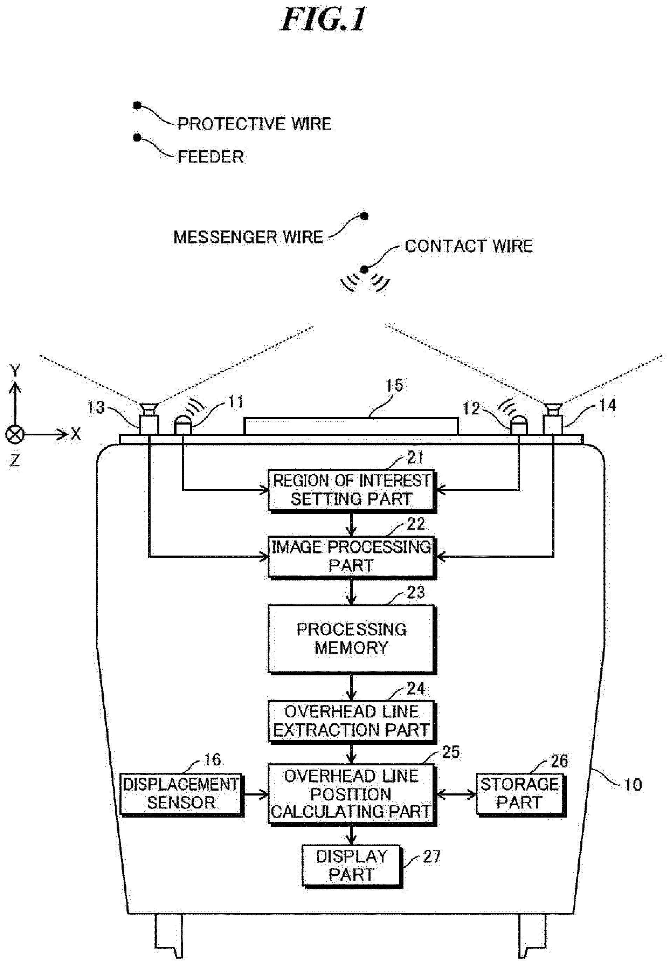

Fig. 1 shows a railway vehicle provided with an overhead line position measuring apparatus according to an embodiment of the present invention. The overhead line position measuring apparatus may include two laser scanning range sensors 11 and 12, two line cameras 13 and 14, and a lighting device 15. These may be arranged on a roof of the railway vehicle 10 such as an inspection car as shown in Fig. 1, or may be arranged on a workbench of a road-rail vehicle or a maintenance vehicle. In addition, the overhead line position measuring apparatus may include a displacement sensor (or an acceleration sensor) 16.

Further, the overhead line position measuring apparatus may include a region of interest setting part 21, an image processing part 22, a processing memory 23, an overhead line extraction part 24, an overhead line position calculating part 25, a storage part 26, and a display part 27. These may be arranged within the railway vehicle 10 as shown in Fig. 1, or may be arranged outside the railway vehicle 10. In the latter case, for example, at the time of data measurement, data outputted from the laser scanning range sensors 11 and 12, the line cameras 13 and 14, and the displacement sensor 16 is once recorded in a removable recording medium such as an external hard disk drive. Then, after the data measurement, the data recorded in the removable recording medium is supplied to the region of interest setting part 21, the image processing part 22, and the overhead line position calculating part 25.

Here, at least one of the region of interest setting part 21, the image processing part 22, the overhead line extraction part 24, and the overhead line position calculating part 25 may be configured of a PC (personal computer) including a CPU (central processing unit), and a software (program) for causing the CPU to perform various processing. The software is recorded in a recording medium of the storage part 26. As the recording medium, a hard disk, a flexible disk, a USB memory, MO, MT, CD-ROM, DVD-ROM or the like can be used.

Over the railway vehicle 10, overhead lines such as a contact wire, a messenger wire, an auxiliary messenger wire (not shown), a feeder, a protective wire, a distribution line (not shown), and a sectioning device (not shown) are situated in substantially parallel to a traveling direction of the railway vehicle 10 (Z-axis in Fig. 1). The feeder is connected to the contact wire at a predetermined interval in the case of direct current feeding system, and connected to a transformer for transmitting electric power to the contact wire in the case of alternating current feeding system, and thereby, the feeder is used for transmitting electric power to the railway vehicle 10 via the contact wire. The protective wire is used for detecting a short-circuit accident. The distribution line is used for supplying electric power to a signal protection apparatus. The sectioning device is used for electrically or mechanically dividing the overhead line. In the present application, the "overhead line" includes the contact wire, the messenger wire, the auxiliary messenger wire, the feeder, the protective wire, the distribution line, the sectioning device, and so on.

The laser scanning range sensors 11 and 12 are arranged with a first distance on a first line (X-axis in Fig. 1) extending in a horizontal direction and substantially orthogonal to the traveling direction of the railway vehicle 10. The laser scanning range sensor 11 projects a laser beam at a project angle within a first range in a plane (XY-plane in Fig. 1) substantially orthogonal to the travelling direction of the railway vehicle 10 to scan a space including the overhead line. Also, the laser scanning range sensor 12 projects a laser beam at a project angle within a second range in the plane substantially orthogonal to the travelling direction of the railway vehicle 10 to scan a space including the overhead line. Thereby, each of the laser scanning range sensors 11 and 12 measures a position of the overhead line to generate angle data representing a direction in which the overhead line exists and distance data representing a distance to the overhead line.

For example, each of the laser scanning range sensors 11 and 12 generates a laser beam having a pulse form by using a laser diode, and projects the laser beam toward the surrounding space via a rotary mirror (polygon mirror or the like) to scan the overhead line in a cross direction. Further, each of the laser scanning range sensors 11 and 12 detects light reflected from the overhead line by using a photodiode or the like.

The projecting direction of the laser beam projected from each of the laser scanning range sensors 11 and 12 is changed by a predetermined angle step by using an angle encoder. The direction in which the overhead line exists is obtained based on an output signal of the angle encoder when the reflected light is detected, and angle data representing an angle at which the overhead line exists is generated. Further, a distance to the overhead line is obtained based on a time period from the time when the laser beam having a pulse form is projected to the time when the reflected light is detected, and distance data representing a distance to the overhead line is generated.

Thus, even in the case where plural overhead lines are situated to overlap with each other when captured from one laser scanning range sensor, it is possible to separately measure the plural overhead lines by using two laser scanning range sensors 11 and 12. However, a measurement result obtained by each of the laser scanning range sensors 11 and 12 generally includes an error which is about 10mm in the case where the measured distance is 1m. Accordingly, the laser scanning range sensors 11 and 12 cannot measure an accurate position of the overhead line, and it is necessary to measure the accurate position of the overhead line by using the line cameras 13 and 14.

The line cameras 13 and 14 are arranged with a second distance on a second line extending in the horizontal direction and substantially orthogonal to the travelling direction of the railway vehicle 10. The second line may be identical with the first line (X-axis in Fig. 1). The line cameras 13 and 14 image a space including the overhead line to respectively generate first image data and second image data each representing a one-dimensional line sensor image.

The lighting device 15 is arranged along a third line extending in a horizontal direction and substantially orthogonal to the travelling direction of the railway vehicle 10. The third line may be identical with the second line. The lighting device 15 lights up the space to be imaged by the line cameras 13 and 14 in the night and so on. Thereby, the overhead line is lighted up brightly.

Each of the line cameras 13 and 14 includes a line sensor having pixels arranged along the second line, and a lens attached in front of the line sensor and for collecting light from an ambient space to the pixels of the line sensor. The lens can make imaging angles within a plane (XY-plane in Fig. 1) substantially orthogonal to the travelling direction of the railway vehicle 10 correspond to positions of the pixels of the line sensor in a manner of 1:1. Accordingly, it becomes possible to obtain an imaging angle of the overhead line in the line camera 13 or 14 based on the position of the pixel of the line sensor.

The region of interest setting part 21 sets at least one region of interest, which includes the measured position of the overhead line, within the plane (XY-plane in Fig. 1) substantially orthogonal to the travelling direction of the railway vehicle 10 based on the angle data and the distance data generated by each of the laser scanning range sensors 11 and 12. Then, the region of interest setting part 21 calculates position information of the region of interest in the one-dimensional line sensor image.

For example, the region of interest setting part 21 calculates, as the position information of the region of interest, a first angle range in which the first line camera 13 captures the region of interest based on the angle data and the distance data generated by the laser scanning range sensor 11. Also, the region of interest setting part 21 calculates, as the position information of the region of interest, a second angle range in which the second line camera 14 captures the region of interest based on the angle data and the distance data generated by the laser scanning range sensor 12.

Further, the region of interest setting part 21 may set the region of interest in consideration of a position and a thickness of the overhead line represented by the angle data and the distance data generated by the laser scanning range sensor 11 or 12, and a measurement error of the laser scanning range sensor 11 or 12. For example, in the case where an overhead line having a radius of 6mm is measured at a position which is 1m away from the laser scanning range sensor, and a measurement error is 10mm at a position which is 1m away from the laser scanning range sensor, a region within a radius of 16mm from a center position of the overhead line represented by the angle data and the distance data is set as the region of interest. Further, the region of interest may be set by multiplying the value by a margin coefficient (for example, 1.2 to 1.5).

The image processing part 22 performs image processing on each of the first and second image data respectively generated by the line cameras 13 and 14 to mask the image except for the region of interest set by the region of interest setting part 21. For example, the image processing part 22 may replace values of the image data representing an image except for the region of interest with "0", or may select and extract only an image of the region of interest.

In the case where the region of interest setting part 21 sets plural regions of interest for each of the first and second image data, the image processing part 22 performs image processing to mask the image except for a region of interest sequentially selected from among the plural regions of interest. Thereby, the first image data representing plural images corresponding to the plural regions of interest and the second image data representing plural images corresponding to the plural regions of interest are obtained.

Here, in one image performed with the image processing, only a line constituting one overhead line is expressed in general. Accordingly, it is possible to suitably separate an overhead line as an object to be measured from other overhead lines or a background, and therefore, it becomes also possible to conduct contactless position measurement with high accuracy by using an inspection car or the like as to an overhead line other than the contact wire. Further, when calculating a position of the overhead line based on two images represented by the first and second image data, it is possible to reduce an amount of the calculation or improve the calculation accuracy.

For example, in the case where the region of interest setting part 21 calculates a first angle range in which the line camera 13 captures the region of interest, the image processing part 22 performs image processing on the first image data to mask the image except for the first angle range in which the line camera 13 captures the region of interest.

Similarly, in the case where the region of interest setting part 21 calculates a second angle range in which the line camera 14 captures the region of interest, the image processing part 22 performs image processing on the second image data to mask the image except for the second angle range in which the line camera 14 captures the region of interest.

In the night, or in an underground section or a tunnel section, in the case of lighting the overhead line by using the lighting device 15, the overhead line is lighted up brighter than the background, and therefore, a luminance value of the image data becomes larger in a region corresponding to the overhead line. On the other hand, in the daytime, in the case of fair weather, the overhead line seems darker than the background, and therefore, a luminance value of the image data becomes less in a region corresponding to the overhead line. Accordingly, it becomes possible to extract the overhead line based on the luminance value of the image data.

While the railway vehicle 10 is driving, the line cameras 13 and 14 sequentially images spaces including the overhead line to generate the first and second image data, respectively, and the image processing part 22 sequentially performs image processing on the generated first and second image data. The image processing part 22 accumulates the sequentially image processed first and second image data into the processing memory 23. By combining the first image data for a predetermined number of lines (for example, 1000 lines), one two-dimensional image is generated. Also, by combining the second image data for a predetermined number of lines (for example, 1000 lines), one two-dimensional image is generated. Thereby, the first image data and the second image data each representing a two-dimensional image are obtained. In the case where the region of interest setting part 21 sets plural regions of interest for each of the first and second image data, the first and second image data each representing plural two-dimensional images corresponding to the plural regions of interest are obtained.

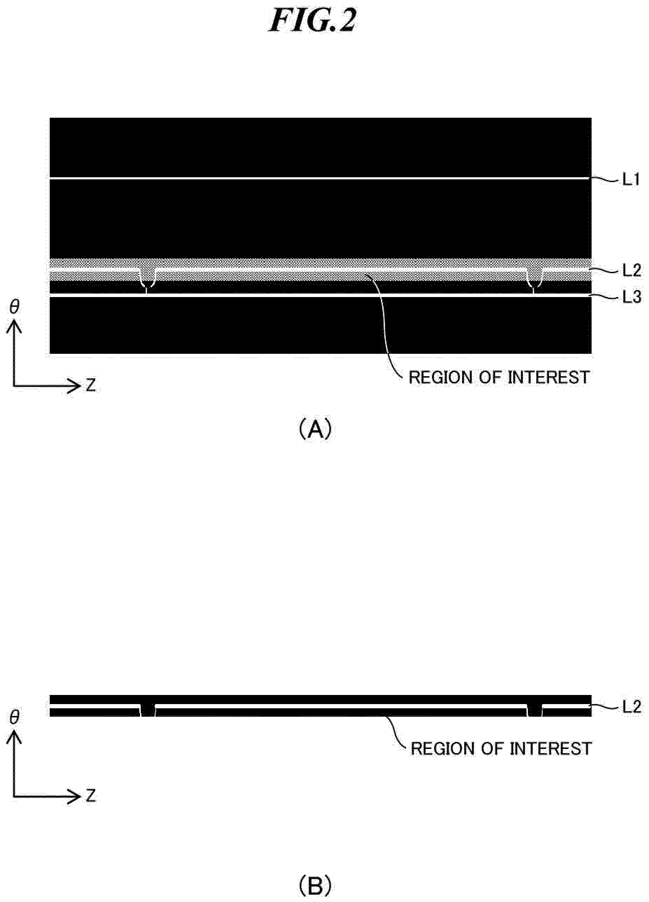

Fig. 2 is a schematic diagram comparatively showing images before and after the image processing by the image processing part. Fig. 2 (A) shows an image before the image processing, and Fig. 2 (B) shows an image after the image processing. In each of Figs. 2 (A) and 2 (B), a two-dimensional image based on image data obtained by one line camera for a predetermined period is shown. Here, the vertical axis represents an angle θ at which the line camera captures the overhead line, and the horizontal axis is Z-axis which corresponds to the time axis in the case where the railway vehicle drives at a constant speed. A time interval at which the image data is stored into the processing memory or the like may be controlled according to the driving speed of the railway vehicle. Alternatively, the image data is stored into the processing memory or the like at a constant time interval while the driving speed of the railway vehicle is stored into the processing memory or the like, and subsequently, the time axis may be converted into the Z-axis.

As shown in Fig. 2 (A), in the image before the image processing by the image processing part, three lines L1 to L3 constituting the overhead lines are expressed. On the other hand, as shown in Fig. 2 (B), in the image after the image processing by the image processing part, lines L1 and L3, which are out of an object to be measured, are masked by selecting and extracting the image of the region of interest, and only a line L2 as an object to be measured is expressed.

Referring to Fig. 1 again, the overhead line extracting part 24 performs overhead line extracting processing on each of the first and second image data accumulated in the proces sing memory 23 and representing a two-dimensional image. That is, the overhead line extracting part 24 detects a region of the overhead line satisfying a predetermined condition related to a luminance value, an angle, or the like in the two-dimensional image represented by each of the first and second image data accumulated in the processing memory 23, and thereby extracts the overhead line. The overhead line extracting processing can be performed by detecting edges of the overhead line, detecting a stripe (bar having a rectangle shape) including the overhead line, or integrating values of the image data in the time axis (Z-axis) direction. Hereinafter, the case of detecting an edge of the overhead line will be explained.

The overhead line extracting part 24 performs edge detection processing on each of the first and second image data accumulated in the processing memory 23 and representing a two-dimensional image, and extracts an edge satisfying a predetermined condition from among the detected plural edges. The edge detection processing is performed according to, for example, a convolution operation using a Sobel filter by obtaining intensity and an angle of the edge.

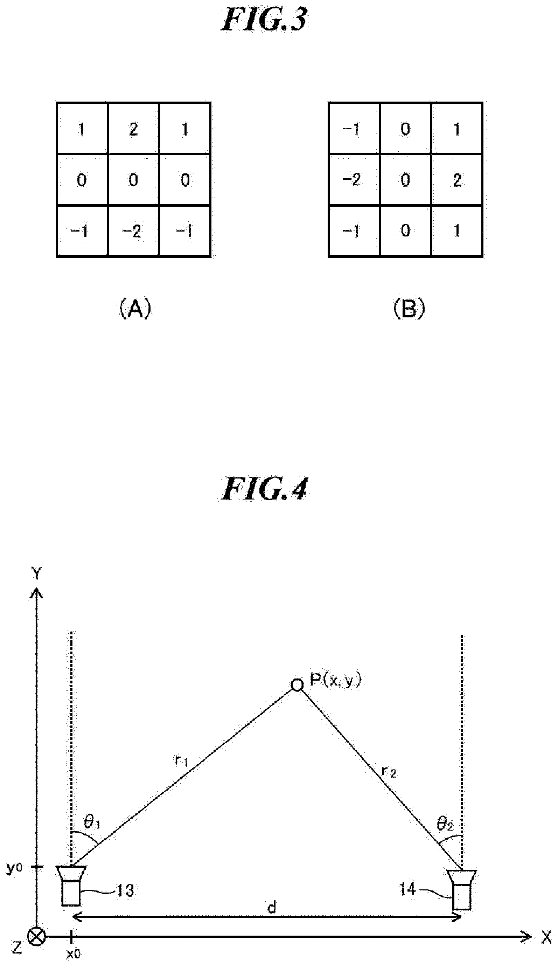

Fig. 3 shows examples of a coefficient matrix (operator) of the Sobel filter. The Sobel filter is a filer to be used for calculating a first order space derivative to detect an outline. The overhead line extracting part 24 multiplies values of nine pixels including a center pixel under consideration and peripheral pixels surrounding the center pixel by a coefficient matrix for horizontal edge detection as shown in Fig. 3 (A), and sums up the multiplication results to obtain a horizontal edge detection value "Ix". Further, the overhead line extracting part 24 multiplies values of nine pixels including a center pixel under consideration and peripheral pixels surrounding the center pixel by a coefficient matrix for vertical edge detection as shown in Fig. 3 (B), and sums up the multiplication results to obtain a vertical edge detection value "Iy".

The intensity "I" and the angle "α" of the edge are obtained by using the following expressions.

$$I \ = \ (Ix^2+Iy^2)^{1/2}$$

$$\alpha \ = \ \tan^{-1}(Iy/Ix)$$

The overhead line extracting part 24 extracts an edge having the intensity "I" larger than a threshold value and the angle "α" within a predetermined range from among the plural edges detected by the edge detection processing, and generates edge coordinates representing a position of the extracted edge. Actually, the overhead line has a thickness, and therefore, two edges are extracted for one overhead line. Then, coordinates of selected one of those edges may be used, or averaged coordinates of those edges may be obtained. Further, in the case where a portion of the edge is lost, the lost portion may be filled up with an extended line of the back and forth edges to generate the edge coordinates.

The coordinates of the overhead line includes, for example, an angle $\theta_1$ at which the line camera 13 captures the overhead line and an angle $\theta_2$ at which the line camera 14 captures the overhead line with respect to each Z-coordinate. The overhead line extracting part 24 outputs the coordinates of the overhead line to the overhead line position calculating part 25. The overhead line position calculating part 25 calculates a two-dimensional position of the overhead line in relation to the railway vehicle 10 based on the coordinates of the overhead line extracted by the overhead line extracting part 24 from two images represented by the first and second image data.

Fig. 4 is a diagram for explanation of a principle for calculating the position of the overhead line. Fig. 4 shows the line cameras 13 and 14, and a position P(x, y) of the overhead line in XY-plane. The overhead line position calculating part 25 obtains the position P(x, y) of the overhead line in relation to the railway vehicle 10 based on the angle $\theta_1$ at which the line camera 13 captures the overhead line and the angle $\theta_2$ at which the line camera 14 captures the overhead line.

As shown in Fig. 4, a distance between the line camera 13 and the line camera 14 is defined as "d" (known), a distance between the line camera 13 and the overhead line is defined as "$r_1$", and a distance between the line camera 14 and the overhead line is defined as "$r_2$", and then, the following expressions hold.

$$r_1 sin\theta_1 + r_2 sin\theta_2 = d$$

$$r_1 cos\theta_1 = r_2 cos\theta_2$$

The distance "$r_1$" can be obtained from these expressions.

$$r_1 = d/\{sin\theta_1 + (cos\theta_1/cos\theta_2)sin\theta_2\}$$

Accordingly, "x" and "y" are calculated as follows.

$$x = r_1 sin\theta_1 + x_0$$

$$y = r_1 cos\theta_1 + y_0$$

Further, the overhead line position calculating part 25 may calculate a two-dimensional position of the overhead line in relation to a railway track (rails) based on a relationship between the railway track and a reference position of the railway vehicle 10 (for example, the origin of XY-coordinates). By sequentially performing the above-mentioned calculation for plural Z-coordinates , a three dimensional position of the overhead line extending along the railway track can be calculated while taking a position of the railway track as a reference. In the present embodiment, by using two laser scanning range sensors 11 and 12, it is possible to improve the calculation accuracy when calculating the position of the overhead line.

The displacement sensor 16 observes displacement due to rolling or vertical motion of the railway vehicle 10 to output displacement data representing displacement of the railway vehicle 10 in relation to the railway track. The overhead line position calculating part 25 may correct the coordinates of the position of the overhead line based on the displacement data outputted from the displacement sensor 16. In the case where an acceleration sensor is used in place of the displacement sensor, the overhead line position calculating part 25 may obtain displacement based on acceleration data outputted from the acceleration sensor, and correct the coordinates of the position of the overhead line. Further, the overhead line position calculating part 25 may store overhead line position data representing the coordinates of the calculated position of the overhead line into the storage part 26, or generate a graph showing the calculated position of the overhead line to cause the display part 27 to display it.

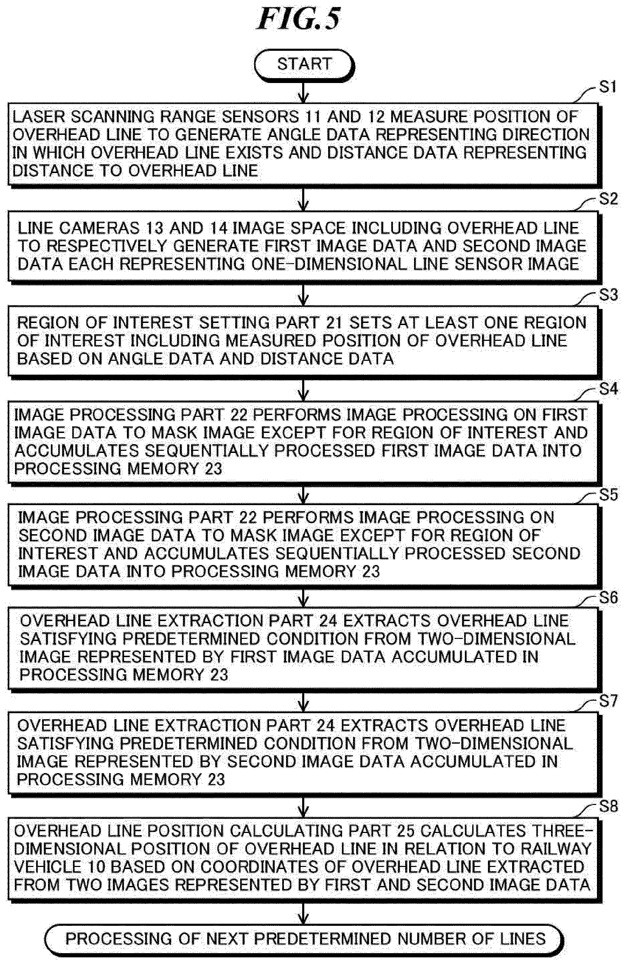

Next, an overhead line position measuring method to be used in the overhead line position measuring apparatus according to the present embodiment will be explained referring to Figs. 1 and 5. Fig. 5 is a flow chart showing an overhead line position measuring method according to an embodiment of the present invention. It should be noted that processes which are independent from each other may be conducted in parallel.

At step S1 as shown in Fig. 5, each of the laser scanning range sensors 11 and 12 measures a position of an overhead line to generate angle data representing a direction in which the overhead line exists and distance data representing a distance to the overhead line.

At step S2, the line cameras 13 and 14 image a space including the overhead line to respectively generate first image data and second image data each representing a one-dimensional line sensor image. At one time imaging, one line of line sensor image is generated by each of the line cameras 13 and 14.

At step S3, the region of interest setting part 21 sets at least one region of interest including the measured position of the overhead line based on the angle data and the distance data generated by each of the laser scanning range sensors 11 and 12. The process at step S3 may be performed for each line of the line sensor image, or may be performed for each line group including plural lines of the line sensor image while adding correction in consideration of continuity of an image.

At step S4, the image processing part 22 performs image processing on the first image data generated by the line camera 13 to mask the image except for the region of interest set at step S3, and accumulates the sequentially processed first image data into the processing memory 23.

Similarly, at step S5, the image processing part 22 performs image processing on the second image data generated by the line camera 14 to mask the image except for the region of interest set at step S3, and accumulates the sequentially processed second image data into the processing memory 23.

When a predetermined number of lines of the first and second image data have been accumulated in the processing memory 23, at step S6, the overhead line extraction part 24 extracts an overhead line satisfying a predetermined condition from a two-dimensional image represented by the first image data accumulated in processing memory 23.

Similarly, at step S7, the overhead line extraction part 24 extracts an overhead line satisfying a predetermined condition from a two-dimensional image represented by the second image data accumulated in processing memory 23.

At step S8, the overhead line position calculating part 25 calculates a three-dimensional position of the overhead line in relation to the railway vehicle 10 based on coordinates of the overhead line extracted from two images represented by the first and second image data. Thus, the three-dimensional position of the overhead line is calculated from the predetermined number of lines of the image data, and then, processing of the next predetermined number of lines of the image data is performed.

In the above-mentioned embodiment, the case of using two laser scanning range sensors and two line cameras has been explained. However, the present invention is not limited to the embodiment, and three or more laser scanning range sensors and three or more line cameras may be used. Further, other than the laser scanning range sensors, devices capable of three-dimensional measurement such as TOF (time of flight) cameras may be used. (In the present application, the laser scanning range sensor, the TOF camera, or the like is generally called "three-dimensional measuring device".) Also, area cameras may be used in place of the line cameras. Thus, many modifications are possible within technical ideas of the present invention by a person having ordinary skill in the art.

INDUSTRIAL APPLICABILITY

The present invention can be applied to an overhead line position measuring apparatus for measuring a three-dimensional position of an overhead line.

Claims

1. An overhead line position measuring apparatus comprising:

a first three-dimensional measuring device (11) and a second three-dimensional measuring device (12) arranged with a first distance on a first line substantially orthogonal to a travelling direction and a height direction of a railway vehicle (10), and for measuring a position of an overhead line;
a first camera (13) and a second camera (14) arranged with a second distance on a second line substantially parallel to the first line, and for imaging a space, which includes the overhead line, within a plane substantially orthogonal to the travelling direction of said railway vehicle to respectively generate first image data and second image data each representing a one-dimensional image;
a region of interest setting part (21) for setting at least one region of interest, which includes the measured position of the overhead line, within a plane substantially orthogonal to the travelling direction of said railway vehicle based on measuring results of said first and second three-dimensional measuring devices;
an image processing part (22) for performing image processing on the first and second image data respectively generated by said first and second cameras (13, 14), and accumulating the sequentially processed first and second image data into a memory (23); an overhead line extracting part (24) for extracting an overhead line satisfying a predetermined condition from a two-dimensional image represented by each of the first and second image data accumulated in the memory (23); and
an overhead line position calculating part (25) for calculating a position of the overhead line in relation to said railway vehicle based on coordinates of the overhead line extracted by said overhead line extracting part (24) from two images represented by the first and second image
data; **characterized in that:**

said first three-dimensional measuring device (11) is adapted to project a laser beam at a project angle within a first range in the plane substantially orthogonal to the travelling direction of said railway vehicle (10) to scan a space including the overhead line, and thereby generating angle data representing a direction in which the overhead line exists and distance data representing a distance to the overhead line; said second three-dimensional measuring device (12) is adapted to project a laser beam at a project angle within a second range in the plane substantially orthogonal to the travelling direction of said railway vehicle (10) to scan a space including the overhead line, and thereby generating angle data representing a direction in which the overhead line exists and distance data representing a distance to the overhead line; said region of interest setting part (21) is adapted to calculate first position information of the region of interest seen from said first camera and second position information of the region of interest seen from said second camera, based on the angle data and the distance data generated by each of said first and second three-dimensional measuring devices;

and

said image processing part (22) is adapted to perform image processing on the first image data to mask the image except for the region of interest based on the first position information, and is adapted to perform image processing on the second image data to mask the image except for the region of interest based on the second position information.

2. The overhead line position measuring apparatus according to claim 1, wherein each of said first and second cameras (13, 14) includes a line sensor having pixels arranged along the second line, and a lens attached in front of said line sensor and for collecting light from an ambient space to the pixels of said line sensor such that imaging angles within a plane substantially orthogonal to the travelling direction of said railway vehicle (10) correspond to positions of the pixels of said line sensor.

3. The overhead line position measuring apparatus according to claim 1 or 2, wherein said region of interest setting part (21) is adapted to set plural regions of interest for each of the first and second image data, and said image processing part (22) is adapted to perform image processing to mask the image except for a region of interest sequentially selected from among the plural regions of interest, and thereby accumulates the first image data representing plural images corresponding to the plural regions of interest and the second image data representing plural images corresponding to the plural regions of interest into said memory (23).

4. The overhead line position measuring apparatus according to any one of claims 1-3, wherein said region of interest setting part (21) is adapted to calculate, as the first position information, a first angle range in which said first camera captures the region of interest and to calculate, as the second position information, a second angle range in which said second camera captures the region of interest.

5. The overhead line position measuring apparatus according to claim 4, wherein said image processing part (22) is adapted to perform image processing on the first image data to mask the image except for the first angle range in which said first camera (13) captures the region of interest, and to performs image processing on the second image data to mask the image except for the second angle range in which said second camera (14) captures the region of interest.

6. The overhead line position measuring apparatus according to any one of claims 1-5, further comprising a lighting device (15) arranged along a third line substantially parallel to the second line, for lighting up the space to be imaged by said first and second cameras (13, 14).

7. The overhead line position measuring apparatus according to any one of claims 1-6, wherein said second line is identical with said first line.

8. An overhead line position measuring method using an overhead line position measuring apparatus according to any one of the preceding claims and comprising the steps of:

(a) setting at least one region of interest, which includes the measured position of the overhead line, within a plane substantially orthogonal to the travelling direction of said railway vehicle (10) based on measuring results of said first and second three-dimensional measuring devices (11, 12);

(b) performing image processing on the first and second image data respectively generated by said first and second cameras (13, 14), and accumulating the sequentially processed first and second image data into a memory (23);

(c) extracting an overhead line satisfying a predetermined condition from a two-dimensional image represented by each of the first and second image data accumulated in the memory (23); and

(d) calculating a position of the overhead line in relation to said railway

vehicle (10) based on coordinates of the overhead line extracted at step (c) from two images represented by the first and second image data;

**characterized in that:**

**EP 2 966 400 B1**

said first three-dimensional measuring device (11) projects a laser beam at a project angle within a first range in the plane substantially orthogonal to the travelling direction of said railway vehicle (10) to scan a space including the overhead line, and thereby generates angle data representing a direction in which the overhead line exists and distance data representing a distance to the overhead line; said second three-dimensional measuring device (12) projects a laser beam at a project angle within a second range in the plane substantially orthogonal to the travelling direction of said railway vehicle (10) to scan a space including the overhead line, and thereby generates angle data representing a direction in which the overhead line exists and distance data representing a distance to the overhead line; step (a) includes calculating first position information of the region of interest seen from said first camera (13) and second position information of the region of interest seen from said second camera (14), based on the angle data and the distance data generated by each of said first and second three-dimensional measuring devices (11, 12); and

step (b) includes performing image processing on the first image data to mask the image except for the region of interest based on the first position information, and performing image processing on the second image data to mask the image except for the region of interest based on the second position information.

**Patentansprüche**

1.  Positionsmessgerät für Oberleitungen, umfassend:

    eine erste dreidimensionale Messvorrichtung (11) und eine zweite dreidimensionale Messvorrichtung (12), die mit einem ersten Abstand auf einer ersten Leitung, die im Wesentlichen zu einer Fahrtrichtung und einer Höhenrichtung eines Schienenfahrzeugs (10) orthogonal ist, angeordnet sind und zum Messen einer Position einer Oberleitung dienen;

    eine erste Kamera (13) und eine zweite Kamera (14), die mit einem zweiten Abstand auf einer zweiten Leitung, die im Wesentlichen zur ersten Leitung parallel ist, angeordnet sind und zum Abbilden eines Raums, der die Oberleitung einschließt, innerhalb einer Ebene dienen, die im Wesentlichen zur Fahrtrichtung des Schienenfahrzeugs orthogonal ist, um jeweils ersten Bilddaten und zweite Bilddaten zu erzeugen, die jede ein eindimensionales Bild wiedergeben;

    einen Festlegeteil für interessierende Bereiche (21) zum Festlegen von mindestens einem interessierenden Bereich, der die gemessene Position der Oberleitung einschließt, innerhalb einer Ebene, die im Wesentlichen zur Fahrtrichtung des Schienenfahrzeugs orthogonal ist, basierend auf Messergebnissen der ersten und zweiten dreidimensionalen Messvorrichtung;

    einen Bildverarbeitungsteil (22) zum Durchführen von Bildverarbeitung an den jeweils von der ersten und zweiten Kamera (13, 14) erzeugten ersten und zweiten Bilddaten, und Ansammeln der sequentiell verarbeiteten ersten und zweiten Bilddaten in einem Speicher (23);

    einen Oberleitungen-Extrahierteil (24) zum Extrahieren einer Oberleitung, die eine vorbestimmte Bedingung erfüllt, aus einem zweidimensionalen Bild, das von jeden der im Speicher (23) angesammelten ersten und zweiten Bilddaten wiedergegeben wird; und

    einen Oberleitungen-Positionsberechnungsteil (25) zum Berechnen einer Position der Oberleitung im Verhältnis zum Schienenfahrzeug basierend auf Koordinaten der Oberleitung, die vom Oberleitungen-Extrahierteil (24) aus zwei Bildern, wie von den ersten und zweiten Bilddaten wiedergegeben werden, extrahiert wurden; **dadurch gekennzeichnet, dass**:

    die erste dreidimensionale Messvorrichtung (11) dazu ausgebildet ist, einen Laserstrahl unter einem Projektwinkel innerhalb eines ersten Bereichs in der Ebene, die im Wesentlichen zur Fahrtrichtung des Schienenfahrzeugs (10) orthogonal ist, zu projizieren, um einen Raum abzutasten, der die Oberleitung einschließt, und dadurch Winkeldaten zu erzeugen, die eine Richtung wiedergeben, in der die Oberleitung vorhanden ist, und Abstandsdaten, die einen Abstand zur Oberleitung wiedergeben;

    wobei die zweite dreidimensionale Messvorrichtung (12) dazu ausgebildet ist, einen Laserstrahl unter einem Projektwinkel innerhalb eines zweiten Bereichs in der Ebene, die im Wesentlichen zur Fahrtrichtung des Schienenfahrzeugs (10) orthogonal ist, zu projizieren, um einen Raum abzutasten, der die Oberleitung einschließt, und dadurch Winkeldaten zu erzeugen, die eine Richtung wiedergeben, in der die Oberleitung vorhanden ist, und Abstandsdaten, die einen Abstand zur Oberleitung wiedergeben;

    wobei der Festlegeteil für interessierende Bereiche (21) dazu ausgebildet ist, erste Positionsinformationen des interessierenden Bereichs aus Sicht der ersten Kamera, und zweite Positionsinformationen des interessierenden Bereichs aus Sicht der zweiten Kamera basierend auf den Winkeldaten und den Abstandsdaten, die von jeder aus der ersten und zweiten dreidimensionalen Messvorrichtung erzeugt wurden, zu berechnen;
und der Bildverarbeitungsteil (22) dazu ausgebildet ist, Bildverarbeitung an den ersten Bilddaten durchzuführen, um das Bild mit Ausnahme des interessierenden Bereichs basierend auf den ersten Positionsinformationen zu maskieren, und dazu ausgebildet ist, Bildverarbeitung an den zweiten Bilddaten durchzuführen, um das Bild mit Ausnahme des interessierenden Bereichs basierend auf den zweiten Positionsinformationen zu maskieren.

2. Positionsmessgerät für Oberleitungen nach Anspruch 1, wobei jede aus der ersten und zweiten Kamera (13, 14) einen Zeilensensor mit Pixeln einschließt, der entlang der zweiten Leitung angeordnet ist, und eine Linse, die vor dem Zeilensensor angebracht ist und zum Sammeln von Licht aus einem Umgebungsraum zu den Pixeln des Zeilensensors dient, derart, dass Abbildungswinkel innerhalb einer Ebene, die im Wesentlichen zur Fahrtrichtung des Schienenfahrzeugs (10) orthogonal ist, Positionen der Pixel des Zeilensensors entsprechen.

3. Positionsmessgerät für Oberleitungen nach Anspruch 1 oder 2, wobei der Festlegeteil für interessierende Bereiche (21) dazu ausgebildet ist, mehrere interessierende Bereiche für jede aus den ersten und zweiten Bilddaten festzulegen, und der Bildverarbeitungsteil (22) dazu ausgebildet ist, Bildverarbeitung durchzuführen, um das Bild mit Ausnahme eines interessierenden Bereichs, der sequentiell aus den mehreren interessierenden Bereichen ausgewählt wird, zu maskieren und dadurch die ersten Bilddaten, die mehrere den mehreren interessierenden Bereichen entsprechende Bilder wiedergeben, und die zweiten Bilddaten, die mehrere den mehreren interessierenden Bereichen entsprechende Bilder wiedergeben, im Speicher (23) ansammelt.

4. Positionsmessgerät für Oberleitungen nach einem der Ansprüche 1-3, wobei der Festlegeteil für interessierende Bereiche (21) dazu ausgebildet ist, als die ersten Positionsinformationen einen ersten Winkelbereich zu berechnen, in dem die erste Kamera den interessierenden Bereich erfasst, und als die zweiten Positionsinformationen einen zweiten Winkelbereich zu berechnen, in dem die zweite Kamera den interessierenden Bereich erfasst.

5. Positionsmessgerät für Oberleitungen nach Anspruch 4, wobei der Bildverarbeitungsteil (22) dazu ausgebildet ist, Bildverarbeitung an den ersten Bilddaten durchzuführen, um das Bild mit Ausnahme des ersten Winkelbereichs, in dem die erste Kamera (13) den interessierenden Bereich erfasst, zu maskieren, und dazu, Bildverarbeitung an den zweiten Bilddaten durchzuführen, um das Bild mit Ausnahme des zweiten Winkelbereichs, in dem die zweite Kamera (14) den interessierenden Bereich erfasst, zu maskieren.

6. Positionsmessgerät für Oberleitungen nach einem der Ansprüche 1-5, weiter eine Beleuchtungsvorrichtung (15) umfassend, die entlang einer dritten, im Wesentlichen zur zweiten Leitung parallelen Leitung angeordnet ist, zum Ausleuchten des Raums, der von der ersten und zweiten Kamera (13, 14) abgebildet werden soll.

7. Positionsmessgerät für Oberleitungen nach einem der Ansprüche 1-6, wobei die zweite Leitung mit der ersten Leitung identisch ist.

8. Verfahren zum Messen der Position einer Oberleitung unter Verwendung eines Positionsmessgerätes für Oberleitungen nach einem der vorstehenden Ansprüche und die Schritte umfassend des:

(a) Festlegens von mindestens einem interessierenden Bereich, der die gemessene Position der Oberleitung einschließt, innerhalb einer Ebene, die im Wesentlichen zur Fahrtrichtung des Schienenfahrzeugs (10) orthogonal ist, basierend auf Messergebnissen der ersten und zweiten dreidimensionalen Messvorrichtung (11, 12);
(b) Durchführens von Bildverarbeitung an den jeweils von der ersten und zweiten Kamera (13, 14) erzeugten ersten und zweiten Bilddaten, und Ansammeins der sequentiell verarbeiteten ersten und zweiten Bilddaten in einem Speicher (23);
(c) Extrahierens einer Oberleitung, die eine vorbestimmte Bedingung erfüllt, aus einem zweidimensionalen Bild, das von jeden der im Speicher (23) angesammelten ersten und zweiten Bilddaten wiedergegeben wird; und
(d) Berechnens einer Position der Oberleitung im Verhältnis zum Schienenfahrzeug (10) basierend auf Koordinaten der Oberleitung, die in Schritt (c) aus zwei Bildern, wie von den ersten und zweiten Bilddaten wiedergegeben werden, extrahiert wurden;

**dadurch gekennzeichnet, dass**:

die erste dreidimensionale Messvorrichtung (11) einen Laserstrahl unter einem Projektwinkel innerhalb eines ersten Bereichs in der Ebene, die im Wesentlichen zur Fahrtrichtung des Schienenfahrzeugs (10) orthogonal ist, projiziert, um einen Raum abzutasten, der die Oberleitung einschließt, und dadurch Winkeldaten erzeugt, die eine Richtung wiedergeben, in der die Oberleitung vorhanden ist, und Abstandsdaten, die einen Abstand zur Oberleitung wiedergeben;

die zweite dreidimensionale Messvorrichtung (12) einen Laserstrahl unter einem Projektwinkel innerhalb eines zweiten Bereichs in der Ebene, die im Wesentlichen zur Fahrtrichtung des Schienenfahrzeugs (10) orthogonal ist, projiziert, um einen Raum abzutasten, der die Oberleitung einschließt, und dadurch Winkeldaten erzeugt, die eine Richtung wiedergeben, in der die Oberleitung vorhanden ist, und Abstandsdaten, die einen Abstand zur Oberleitung wiedergeben;

Schritt (a) das Berechnen von ersten Positionsinformationen des interessierenden Bereichs aus Sicht der ersten Kamera (13), und zweiten Positionsinformationen des interessierenden Bereichs aus Sicht der zweiten Kamera (14) basierend auf den Winkeldaten und den Abstandsdaten, die von jeder aus der ersten und zweiten dreidimensionalen Messvorrichtung (11, 12) erzeugt wurden, einschließt;

und Schritt (b) das Durchführen von Bildverarbeitung an den ersten Bilddaten, um das Bild mit Ausnahme des interessierenden Bereichs basierend auf den ersten Positionsinformationen zu maskieren, und Durchführen von Bildverarbeitung an den zweiten Bilddaten einschließt, um das Bild mit Ausnahme des interessierenden Bereichs basierend auf den zweiten Positionsinformationen zu maskieren.

## Revendications

1. Appareil de mesure de position de ligne aérienne comprenant :

un premier dispositif de mesure tridimensionnelle (11) et un second dispositif de mesure tridimensionnelle (12) agencés à une première distance sur une première ligne sensiblement orthogonale à une direction de déplacement et une direction de la hauteur d'un véhicule ferroviaire (10), et pour mesurer une position d'une ligne aérienne ;

une première caméra (13) et une seconde caméra (14) agencées à une seconde distance sur une seconde ligne sensiblement parallèle à la première ligne, et pour produire une image d'un espace, qui comprend la ligne aérienne, dans un plan sensiblement orthogonal à la direction de déplacement dudit véhicule ferroviaire pour générer respectivement de premières données d'image et de secondes données d'image représentant chacune une image monodimensionnelle ;

une partie d'établissement de région d'intérêt (21) pour établir au moins une région d'intérêt, qui comprend la position mesurée de la ligne aérienne, dans un plan sensiblement orthogonal à la direction de déplacement dudit véhicule ferroviaire sur la base de résultats de mesure desdits premier et second dispositifs de mesure tridimensionnelle ;

une partie de traitement d'image (22) pour réaliser un traitement d'image sur les premières et secondes données d'image générées respectivement par lesdites première et seconde caméras (13, 14), et accumuler les premières et secondes données d'image produites successivement dans une mémoire (23) ;

une partie d'extraction de ligne aérienne (24) pour extraire une ligne aérienne en répondant à une condition prédéterminée à partir d'une image bidimensionnelle représentée par chacune desdites premières et secondes données d'image accumulées dans la mémoire (23) ; et

une partie de calcul de position de ligne aérienne (25) pour calculer une position de la ligne aérienne par rapport audit véhicule ferroviaire sur la base de coordonnées de la ligne aérienne extraite par ladite partie d'extraction de ligne aérienne (24) à partir de deux images représentées par les premières et secondes données d'image ;

**caractérisé en ce que** :

ledit premier dispositif de mesure tridimensionnelle (11) est adapté pour projeter un faisceau laser à un angle de projection dans une première portée dans le plan sensiblement orthogonal à la direction de déplacement dudit véhicule ferroviaire (10) pour balayer un espace comprenant la ligne aérienne, et générer ainsi des données d'angle représentant une direction dans laquelle la ligne aérienne existe et des données de distance représentant une distance à la ligne aérienne ; ledit second dispositif de mesure tridimensionnelle (12) est adapté pour projeter un faisceau laser à un angle de projection dans une seconde portée dans le plan sensiblement orthogonal à la direction de déplacement dudit véhicule ferroviaire (10) pour balayer un espace comprenant la ligne aérienne, et générer ainsi des données d'angle représentant une direction dans laquelle la ligne aérienne existe et des données de distance représentant une distance à la ligne aérienne ; ladite partie d'établissement de région d'intérêt (21) est adaptée pour calculer de premières informations de position de la région d'intérêt vue depuis ladite première caméra et de secondes informations de position de la région d'intérêt vue depuis ladite seconde caméra, sur la base des données d'angle et des données de distance générées par chacun desdits premier et second dispositifs de mesure tridimensionnelle ;
et

ladite partie de traitement d'image (22) est adaptée pour réaliser un traitement d'image sur les premières données d'image pour masquer l'image à l'exception de la région d'intérêt sur la base des premières informations de position, et est adaptée pour réaliser un traitement d'image sur les secondes données d'image pour masquer l'image à l'exception de la région d'intérêt sur la base des secondes informations de position.

2. Appareil de mesure de position de ligne aérienne selon la revendication 1, dans lequel chacune desdites première et seconde caméras (13, 14) comprend un capteur de ligne ayant des pixels agencés le long de la seconde ligne, et une lentille attachée en face dudit capteur de ligne et pour collecter la lumière d'un espace ambiant jusqu'aux pixels dudit capteur de ligne de sorte que des angles d'imagerie dans un plan sensiblement orthogonal à la direction de déplacement dudit véhicule ferroviaire (10) correspondent à des positions des pixels dudit capteur de ligne.

3. Appareil de mesure de position de ligne aérienne selon la revendication 1 ou 2, dans lequel ladite partie d'établissement de région d'intérêt (21) est adaptée pour établir plusieurs régions d'intérêt pour chacune des premières et secondes données d'image, et ladite partie de traitement d'image (22) est adaptée pour réaliser un traitement d'image pour masquer l'image à l'exception d'une région d'intérêt sélectionnée successivement parmi les plusieurs régions d'intérêt, et accumule ainsi les premières données d'image représentant plusieurs images correspondant aux plusieurs régions d'intérêt et les secondes données d'image représentant plusieurs images correspondant aux plusieurs régions d'intérêt dans ladite mémoire (23).

4. Appareil de mesure de position de ligne aérienne selon l'une quelconque des revendications 1 à 3, dans lequel ladite partie d'établissement de région d'intérêt (21) est adaptée pour calculer, en tant que premières informations de position, une première plage d'angles dans laquelle ladite première caméra saisit la région d'intérêt et pour calculer, en tant que secondes informations de position, une seconde plage d'angles dans laquelle ladite seconde caméra saisit la région d'intérêt.

5. Appareil de mesure de position de ligne aérienne selon la revendication 4, dans lequel ladite partie de traitement d'image (22) est adaptée pour réaliser un traitement d'image sur les premières données d'image pour masquer l'image à l'exception de la première plage d'angles dans laquelle ladite première caméra (13) saisit la région d'intérêt, et pour réaliser un traitement d'image sur les secondes données d'image pour masquer l'image à l'exception de la seconde plage d'angles dans laquelle ladite seconde caméra (14) saisit la région d'intérêt.

6. Appareil de mesure de position de ligne aérienne selon l'une quelconque des revendications 1 à 5, comprenant en outre un dispositif d'éclairage (15) agencé le long d'une troisième ligne sensiblement parallèle à la seconde ligne, pour éclairer l'espace dont lesdites première et seconde caméras (13, 14) doivent produire une image.

7. Appareil de mesure de position de ligne aérienne selon l'une quelconque des revendications 1 à 6, dans lequel ladite seconde ligne est identique à ladite première ligne.

8. Procédé de mesure de position de ligne aérienne utilisant un appareil de mesure de position de ligne aérienne selon l'une quelconque des revendications précédentes et comprenant les étapes consistant à :

(a) établir au moins une région d'intérêt, qui comprend la position mesurée de la ligne aérienne, dans un plan sensiblement orthogonal à la direction de déplacement dudit véhicule ferroviaire (10) sur la base de résultats de mesure desdits premier et second dispositifs de mesure tridimensionnelle (11, 12) ;
(b) réaliser un traitement d'image sur lesdites premières et secondes données d'image générées respectivement par lesdites première et seconde caméras (13, 14), et accumuler les premières et secondes données d'image traitées successivement dans une mémoire (23) ;
(c) extraire une ligne aérienne répondant à une condition prédéterminée à partir d'une image bidimensionnelle représentée par chacune des premières et secondes données d'image accumulées dans la mémoire (23) ; et
(d) calculer une position de la ligne aérienne par rapport audit véhicule ferroviaire (10) sur la base de coordonnées de la ligne aérienne extraite à l'étape (c) à partir de deux images représentées par les premières et secondes données d'image ; **caractérisé en ce que** :

ledit dispositif de mesure tridimensionnelle (11) projette un faisceau laser à un angle de projection dans une première portée dans le plan sensiblement orthogonal à la direction de déplacement dudit véhicule ferroviaire (10) pour balayer un espace comprenant la ligne aérienne, et générer ainsi des données d'angle représentant une direction dans laquelle la ligne aérienne existe et des données de distance représentant une distance à la ligne aérienne ; ledit second dispositif de mesure tridimensionnelle (12) projette un faisceau laser à un angle de projection dans une seconde portée dans le plan sensiblement orthogonal à la direction de déplacement dudit véhicule ferroviaire (10) pour balayer un espace comprenant la ligne aérienne, et générer ainsi des données d'angle représentant une direction dans laquelle la ligne aérienne existe et des données de distance représentant une distance à la ligne aérienne ;

l'étape (a) comprend le calcul de premières informations de position de la région d'intérêt vue depuis ladite première caméra (13) et de secondes informations de position de la région d'intérêt vue depuis ladite seconde caméra (14), sur la base des données d'angle et des données de distance générées par chacun desdits premier et second dispositifs de mesure tridimensionnelle (11, 12) ; et

l'étape (b) comprend la réalisation d'un traitement d'image sur les premières données d'image pour masquer l'image à l'exception de la région d'intérêt sur la base des premières informations de position, et la réalisation d'un traitement d'image sur les secondes données d'image pour masquer l'image à l'exception de la région d'intérêt sur la base des secondes informations de position.

# *FIG.1*

PROTECTIVE WIRE

FEEDER

MESSENGER WIRE          CONTACT WIRE

Y

X

Z

13          11          15          12          14

REGION OF INTEREST
SETTING PART          21

IMAGE PROCESSING
PART          22

PROCESSING
MEMORY          23

OVERHEAD LINE
EXTRACTION PART          24

16          25          26          10

DISPLACEMENT
SENSOR          OVERHEAD LINE
POSITION
CALCULATING PART          STORAGE
PART

DISPLAY
PART          27

# FIG.2

θ

→ Z

L1

L2

L3

REGION OF INTEREST

(A)

θ

→ Z

L2

REGION OF INTEREST

(B)

# FIG.3

| 1 | 2 | 1 |
|---|---|---|
| 0 | 0 | 0 |
| −1 | −2 | −1 |

(A)

| −1 | 0 | 1 |
|----|---|---|
| −2 | 0 | 2 |
| −1 | 0 | 1 |

(B)

# FIG.4

## *FIG.5*

```
                              ┌─────────┐
                              │  START  │
                              └─────────┘
                                   │
                                   ▼                              ╭─ S1
┌────────────────────────────────────────────────────────────────┐
│ LASER SCANNING RANGE SENSORS 11 AND 12 MEASURE POSITION OF       │
│ OVERHEAD LINE TO GENERATE ANGLE DATA REPRESENTING DIRECTION      │
│ IN WHICH OVERHEAD LINE EXISTS AND DISTANCE DATA REPRESENTING     │
│ DISTANCE TO OVERHEAD LINE                                        │
└────────────────────────────────────────────────────────────────┘
                                   │
                                   ▼                              ╭─ S2
┌────────────────────────────────────────────────────────────────┐
│ LINE CAMERAS 13 AND 14 IMAGE SPACE INCLUDING OVERHEAD LINE       │
│ TO RESPECTIVELY GENERATE FIRST IMAGE DATA AND SECOND IMAGE       │
│ DATA EACH REPRESENTING ONE-DIMENSIONAL LINE SENSOR IMAGE         │
└────────────────────────────────────────────────────────────────┘
                                   │
                                   ▼                              ╭─ S3
┌────────────────────────────────────────────────────────────────┐
│ REGION OF INTEREST SETTING PART 21 SETS AT LEAST ONE REGION      │
│ OF INTEREST INCLUDING MEASURED POSITION OF OVERHEAD LINE         │
│ BASED ON ANGLE DATA AND DISTANCE DATA                            │
└────────────────────────────────────────────────────────────────┘
                                   │
                                   ▼                              ╭─ S4
┌────────────────────────────────────────────────────────────────┐
│ IMAGE PROCESSING PART 22 PERFORMS IMAGE PROCESSING ON FIRST      │
│ IMAGE DATA TO MASK IMAGE EXCEPT FOR REGION OF INTEREST AND       │
│ ACCUMULATES SEQUENTIALLY PROCESSED FIRST IMAGE DATA INTO         │
│ PROCESSING MEMORY 23                                             │
└────────────────────────────────────────────────────────────────┘
                                   │
                                   ▼                              ╭─ S5
┌────────────────────────────────────────────────────────────────┐
│ IMAGE PROCESSING PART 22 PERFORMS IMAGE PROCESSING ON            │
│ SECOND IMAGE DATA TO MASK IMAGE EXCEPT FOR REGION OF             │
│ INTEREST AND ACCUMULATES SEQUENTIALLY PROCESSED SECOND           │
│ IMAGE DATA INTO PROCESSING MEMORY 23                             │
└────────────────────────────────────────────────────────────────┘
                                   │
                                   ▼                              ╭─ S6
┌────────────────────────────────────────────────────────────────┐
│ OVERHEAD LINE EXTRACTION PART 24 EXTRACTS OVERHEAD LINE          │
│ SATISFYING PREDETERMINED CONDITION FROM TWO-DIMENSIONAL          │
│ IMAGE REPRESENTED BY FIRST IMAGE DATA ACCUMULATED IN             │
│ PROCESSING MEMORY 23                                             │
└────────────────────────────────────────────────────────────────┘
                                   │
                                   ▼                              ╭─ S7
┌────────────────────────────────────────────────────────────────┐
│ OVERHEAD LINE EXTRACTION PART 24 EXTRACTS OVERHEAD LINE          │
│ SATISFYING PREDETERMINED CONDITION FROM TWO-DIMENSIONAL          │
│ IMAGE REPRESENTED BY SECOND IMAGE DATA ACCUMULATED IN            │
│ PROCESSING MEMORY 23                                             │
└────────────────────────────────────────────────────────────────┘
                                   │
                                   ▼                              ╭─ S8
┌────────────────────────────────────────────────────────────────┐
│ OVERHEAD LINE POSITION CALCULATING PART 25 CALCULATES THREE-     │
│ DIMENSIONAL POSITION OF OVERHEAD LINE IN RELATION TO RAILWAY     │
│ VEHICLE 10 BASED ON COORDINATES OF OVERHEAD LINE EXTRACTED       │
│ FROM TWO IMAGES REPRESENTED BY FIRST AND SECOND IMAGE DATA       │
└────────────────────────────────────────────────────────────────┘
                                   │
                                   ▼
              ╭─────────────────────────────────────────────╮
              │ PROCESSING OF NEXT PREDETERMINED NUMBER OF LINES │
              ╰─────────────────────────────────────────────╯
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P20128026A B
- WO 2011088509 A1
- JP P20128026 A